# EUROPEAN PATENT SPECIFICATION

(11) **EP 3 342 845 B1**
(45) Date of publication and mention of the grant of the patent: **05.02.2020**
(21) Application number: 17210072.9
(22) Date of filing: 22.12.2017
(51) Int. Cl.: C10M 171/00, C10M 107/10, C10N 30/04, C10N 40/30

(54) **LUBRICATING OIL COMPOSITION FOR REFRIGERATING MACHINES**
SCHMIERÖLZUSAMMENSETZUNG FÜR KÄLTEMASCHINEN
COMPOSITION D'HUILE LUBRIFIANTE POUR MACHINES FRIGORIFIQUES

(30) Priority: 28.12.2016 JP 2016255912
(43) Date of publication of application: 04.07.2018
(73) Proprietor: JXTG Nippon Oil & Energy Corporation, Chiyoda-ku Tokyo 100-8162 (JP)
(72) Inventor: YAMAGUCHI, Kentaro, Chiyoda-ku, Tokyo 100-8162 (JP); SHIMPO, Hiroko, Chiyoda-ku, Tokyo 100-8162 (JP); OKIDO, Takeshi, Chiyoda-ku, Tokyo 100-8162 (JP); SAWADA, Ken, Chiyoda-ku, Tokyo 100-8162 (JP); KONNO, Souichirou, Chiyoda-ku, Tokyo 100-8162 (JP)
(74) Representative: Grünecker Patent- und Rechtsanwälte PartG mbB

(56) References cited:
- WO-A1-2013/187084
- US-A- 5 431 835
- CHARLET G ET AL: "Thermodynamic properties of polyolefin solutions at high temperature: 1. Lower critical solubility temperatures of polyethylene, polypropylene and ethylene-propylene copolymers in hydrocarbon solvents", POLYMER, ELSEVIER SCIENCE PUBLISHERS B.V, GB, vol. 22, no. 9, 1 September 1981 (1981-09-01), pages 1181-1189, XP024114797, ISSN: 0032-3861, DOI: 10.1016/0032-3861(81)90130-0 [retrieved on 1981-09-01]
- Ashish Sen ET AL: "Molecular structures and solution viscosities of ethylene-propylene copolymers", Macromolecules, vol. 23, no. 9, 1 April 1990 (1990-04-01), pages 2519-2524, XP055540708, US ISSN: 0024-9297, DOI: 10.1021/ma00211a020

## Description

### TECHNICAL FIELD

The present invention relates to refrigerating machine oils and working fluid compositions for a refrigerating machine.

### BACKGROUND

Examples of the refrigerants conventionally used in refrigerating machines for freezers, air-conditioners or the like include saturated fluorohydrocarbon refrigerants such as R410A. However, some of the saturated fluorohydrocarbon refrigerants have a high global warming potential (GWP), and the saturated fluorohydrocarbon refrigerants are on the way to being regulated from the viewpoint of preventing global warming. Hydrocarbon refrigerants are now receiving attention as refrigerants having a low GWP.

For example, as a refrigerating machine oil used with a refrigerant such as a saturated fluorohydrocarbon refrigerant or a hydrocarbon refrigerant, Japanese Unexamined Patent Publication No. 2016-50242 discloses a refrigerating machine oil comprising a base oil containing an oxygen-containing organic compound, and a predetermined phosphorus-based compound.
US5431835A discloses a lubricant composition for a compression-type refrigerating machine comprising fluorinated hydrocarbon as refrigerant. WO2013/187084A1 discloses a working fluid composition comprising difluoromethane refrigerant (HFC32) and ethylene/α-olefin copolymer as refrigerating machine oil (Lucant HC-40).

### SUMMARY

Incidentally, compatibility with the refrigerant is required for the refrigerating machine oil to circulate the refrigerating machine oil together with the refrigerant in the refrigerant circulating cycle of the refrigerating machine. For example, because the refrigerating machine oil and the refrigerant are cooled to a low temperature (for example, about -40°C) in the refrigerant circulating cycle, the refrigerating machine oil is required not to be deposited at low temperature in the co-presence of the refrigerant (have good low temperature deposition properties). Such properties of the refrigerating machine oil, even if favorable to a refrigerant, are not always favorable to another refrigerant, and the refrigerating machine oil needs to be developed for each refrigerant according to the desired properties.
This object is solved with the working fluid composition of claim 1. Preferred embodiments are defined in the subclaims 2 to 4 as well as in the description. The present invention further provides a use of a copolymer as a base oil as defined in claim 5. Preferred embodiments of this use are defined in subclaims 6 to 8 as well as in the description.

The present invention has been made in consideration of such circumstances, and an object of the present invention is to provide a working fluid composition for a refrigerating machine having good low temperature deposition properties in the co-presence of a hydrocarbon refrigerant.

The present invention is set out in the appended set of claims.

According to one aspect, the present invention provides a working fluid composition for a refrigerating machine, comprising a refrigerating machine oil comprising a copolymer of ethylene and an α-olefin as a base oil, and a hydrocarbon refrigerant.

The refrigerating machine oil preferably further comprises an alkylbenzene as the base oil.

The mass ratio of the content of the copolymer to the content of the alkylbenzene is preferably 10/90 to 90/10.

The mass ratio of the content of the copolymer to the content of the alkylbenzene is preferably 10/90 to 50/50.

According to the present invention, a working fluid composition for a refrigerating machine having good low temperature deposition properties in the co-presence of a hydrocarbon refrigerant can be provided.

### BRIEF DESCRIPTION OF THE DRAWINGS

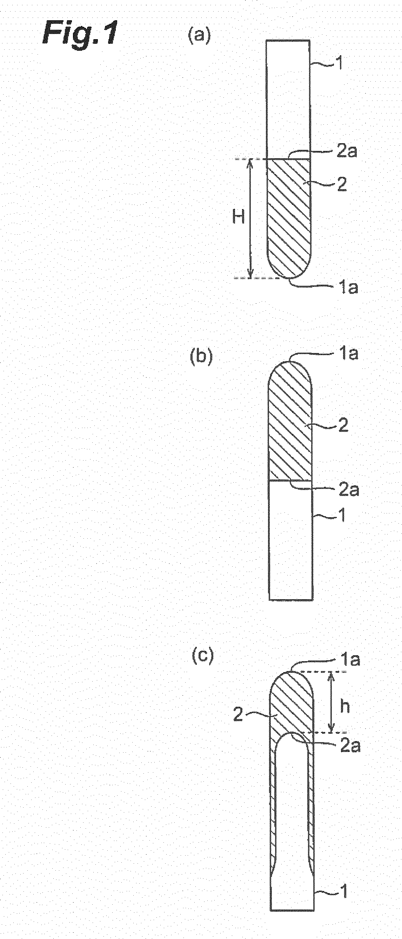

FIGS. 1(a) to 1(c) are schematic views for illustrating the methods for evaluating the low temperature fluidity.

### DETAILED DESCRIPTION

Hereinafter, the embodiment of the present invention will be described in detail.

The refrigerating machine oil comprises a copolymer of ethylene and an α-olefin (hereinafter, also simply referred to as "copolymer") as a base oil. The α-olefin may be linear or may be branched. The α-olefin may have 3 to 10 carbon atoms, for example. The α-olefin having 3 to 10 carbon atoms is specifically propylene, 1-butene, 1-pentene, 3-methyl-1-butene, 1-hexene, 4-methyl-1-pentene, 3-methyl-1-pentene, 1-octene, 1-decene, or the like. The α-olefin may be one alone of these, or may be a mixture of two or more of these.

The content of the ethylene unit forming the copolymer may be 30 mol% or more, 35 mol% or more, or 40 mol% or more and may be 80 mol% or less, 75 mol% or less, or 70 mol% or less based on the total amount of the monomer units forming the copolymer. The content of the α-olefin unit forming the copolymer may be 20 mol% or more, 25 mol% or more, or 30 mol% or more, and may be 70 mol% or less, 65 mol% or less, or 60 mol% or less based on the total amount of the monomer units forming the copolymer.

The number average molecular weight (Mn) of the copolymer may be 500 or more, 600 or more, or 700 or more, and may be 12000 or less, 11000 or less, or 10000 or less. The molecular weight distribution (Mw/Mn) of the copolymer may be 3 or less, 2.7 or less, or 2.5 or less. The Mn and molecular weight distribution (Mw/Mn) in the present invention refer to values in terms of standard polystyrenes measured by GPC analysis.

The kinematic viscosity at 40°C of the copolymer may be 100 mm²/s or more, 1000 mm²/s or more, or 10000 mm²/s or more, and may be 100000 mm²/s or less, 70000 mm²/s or less, or 50000 mm²/s or less. The kinematic viscosity at 100°C of the copolymer may be 10 mm²/s or more, 15 mm²/s or more, or 20 mm²/s or more, and may be 5000 mm²/s or less, 4000 mm²/s or less, 3000 mm²/s or less. The viscosity index of the copolymer may be 100 or more, 140 or more, or 200 or more, and may be 500 or less, 400 or less, or 300 or less. The kinematic viscosity and the viscosity index in the present invention refer to the kinematic viscosity and the viscosity index measured according to JIS K2283:2000, respectively.

The pour point of the copolymer may be -40°C or less, -25°C or less, or -10°C or less. The pour point in the present invention means the pour point measured according to JIS K2269-1987.

The flash point of the copolymer may be 160°C or more, 200°C or more, or 240°C or more. The flash point in the present invention means the flash point measured according to JIS K2265-4:2007.

The refrigerating machine oil according to the present embodiment may further comprise another base oil in addition to the copolymer of ethylene and the α-olefin. Examples of the another base oil include hydrocarbon oils other than the copolymer of ethylene and the α-olefin, and oxygen-containing oils. Examples of the hydrocarbon oils include mineral oil-based hydrocarbon oils and synthetic hydrocarbon oils. Examples of the oxygen-containing oils include esters, ethers, carbonates, ketones, silicones, and polysiloxanes. Examples of the synthetic hydrocarbon oils include alkylbenzenes, alkylnaphthalenes, and poly-α-olefins (PAOs).

The content of the polymer may be 5% by mass or more, 10% by mass or more, 30% by mass or more, 50% by mass or more, 70% by mass or more, or 90% by mass or more, based on the total amount of the base oil.

The refrigerating machine oil preferably further comprises an alkylbenzene as the another base oil from the viewpoint of high low temperature fluidity in the co-presence of the hydrocarbon refrigerant.

The alkylbenzene may be a branched alkylbenzene in which an alkyl group bonded to a benzene ring is a branched alkyl group, or may be a linear alkylbenzene in which an alkyl group bonded to a benzene ring is a linear alkyl group. The alkylbenzene is preferably a branched alkylbenzene in view of high compatibility with the hydrocarbon refrigerant, and preferably a linear alkylbenzene in view of a small variation in viscosity caused by temperature and good low temperature properties. The alkylbenzene, if mixed with the copolymer of ethylene and the α-olefin, is particularly preferably a linear alkylbenzene in view of high low temperature fluidity in the co-presence of the hydrocarbon refrigerant.

The alkyl group of the alkylbenzene has preferably 1 to 30, more preferably 4 to 20 carbon atoms from the viewpoint of obtaining a base oil having suitable viscosity. The number of alkyl groups in one molecule of the alkylbenzene is preferably 1 to 4, more preferably 1 to 3 from the viewpoint of obtaining a base oil having suitable viscosity although the number of alkyl groups depends on the number of carbon atoms of the alkyl group.

Specific examples of such alkylbenzene described above include alkylbenzene (A) and alkylbenzene (B),
alkylbenzene (A): an alkylbenzene having 1 to 4 alkyl groups having 1 to 19 carbon atoms and having the total carbon atoms in the alkyl groups of 9 to 19 (preferably an alkylbenzene having 1 to 4 alkyl groups having 1 to 15 carbon atoms and having the total carbon atoms in the alkyl groups of 9 to 15);
alkylbenzene (B): an alkylbenzene having 1 to 4 alkyl groups having 1 to 40 carbon atoms and having the total carbon atoms in the alkyl groups of 20 to 40 (preferably an alkylbenzene having 1 to 4 alkyl groups having 1 to 30 carbon atoms and having the total carbon atoms in the alkyl groups of 20 to 30).

Examples of the alkyl group having 1 to 19 carbon atoms in the alkylbenzene (A) specifically include a methyl group, an ethyl group, a propyl group (including all the isomers, the same is also true hereinafter), a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group. These alkyl groups may be linear or may be branched.

Examples of the alkyl group having 1 to 40 carbon atoms in the alkylbenzene (B) specifically include a methyl group, an ethyl group, a propyl group (including all the isomers, the same is also true hereinafter), a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, a heneicosyl group, a docosyl group, a tricosyl group, a tetracosyl group, a pentacosyl group, a hexacosyl group, a heptacosyl group, an octacosyl group, a nonacosyl group, a triacontyl group, a hentriacontyl group, a dotriacontyl group, a tritriacontyl group, a tetratriacontyl group, a pentatriacontyl group, a hexatriacontyl group, a heptatriacontyl group, an octatriacontyl group, a nonatriacontyl group, and a tetracontyl group. These alkyl groups may be linear or may be branched.

The number of alkyl groups in the alkylbenzene (A) or (B) is 1 to 4, preferably 1 or 2 in view of stability and availability. Namely, the alkylbenzene (A) or (B) is preferably, a monoalkylbenzene, a dialkylbenzene, or a mixture thereof.

The alkylbenzene (A) or (B) may contain only an alkylbenzene having a single structure, or may be a mixture of alkylbenzenes having different structures from each other as long as the alkylbenzenes satisfy the conditions described above.

The kinematic viscosity at 40°C of the alkylbenzene may be 3 mm²/s or more, 4 mm²/s or more, or 5 mm²/s or more, and may be 100 mm²/s or less, 80 mm²/s or less, or 70 mm²/s or less.

The pour point of the alkylbenzene may be -40°C or less, - 30°C or less, or -20°C or less.

The flash point of the alkylbenzene may be 140°C or more, 150°C or more, 155°C or more, or 160°C or more.

If the refrigerating machine oil further comprises the alkylbenzene in addition to the copolymer of ethylene and the α-olefin, the mass ratio of the content of the copolymer of ethylene and the α-olefin to the content of the alkylbenzene (copolymer of ethylene and α-olefin/alkylbenzene) is preferably 10/90 or more, 20/80 or more, or 30/70 or more, and preferably 90/10 or less, more preferably, 80/20 or less, 70/30 or less, 60/40 or less, or 50/50 or less from the viewpoint of high low temperature fluidity. The ratio is preferably 10/90 to 90/10, 10/90 to 80/20, 10/90 to 70/30, 10/90 to 60/40, 10/90 to 50/50, 20/80 to 90/10, 20/80 to 80/20, 20/80 to 70/30, 20/80 to 60/40, 20/80 to 50/50, 30/70 to 90/10, 30/70 to 80/20, 30/70 to 70/30, 30/70 to 60/40, or 30/70 to 50/50 from the viewpoint of high low temperature fluidity.

The kinematic viscosity at 40°C of the base oil is preferably 3 mm²/s or more, more preferably 4 mm²/s or more, still more preferably 5 mm²/s or more. The kinematic viscosity at 40°C of the base oil is preferably 1000 mm²/s or less, more preferably 500 mm²/s or less, still more preferably 400 mm²/s or less. The kinematic viscosity at 100°C of the base oil is preferably 1 mm²/s or more, more preferably 2 mm²/s or more. The kinematic viscosity at 100°C of the base oil is preferably 100 mm²/s or less, more preferably 50 mm²/s or less.

The content of the base oil may be 50% by mass or more, 60% by mass or more, 70% by mass or more, 80% by mass or more, or 90% by mass or more, based on the total amount of the refrigerating machine oil.

The refrigerating machine oil may further comprise an additive. Examples of the additives include an acid scavenger, an antioxidant, an extreme-pressure agent, an oiliness improver, an antifoaming agent, a metal deactivator, an antiwear agent, a viscosity index improver, a pour-point depressant, and a detergent dispersant. The content of these additives may be 10% by mass or less, or 5% by mass or less, based on the total amount of the refrigerating machine oil.

Examples of the antiwear agent include phosphorus-based antiwear agents such as phosphoric acid esters, acidic phosphoric acid esters, thiophosphoric acid esters, amine salts of acidic phosphoric acid esters, chlorinated phosphoric acid esters, and phosphorous acid esters. These phosphorus-based antiwear agent compounds can be used alone or in combination of two or more.

The phosphoric acid ester may be trialkyl phosphate, trialkenyl phosphate, or triaryl phosphate, for example. The trialkyl phosphate may be tributyl phosphate, tripentyl phosphate, trihexyl phosphate, triheptyl phosphate, trioctyl phosphate, trinonyl phosphate, tridecyl phosphate, triundecyl phosphate, tridodecyl phosphate, tri(tridecyl)phosphate, tritetradecyl phosphate, tripentadecyl phosphate, trihexadecyl phosphate, triheptadecyl phosphate, or trioctadecyl phosphate, for example. The trialkenyl phosphate may be trioleyl phosphate, for example.

The triaryl phosphate may be a compound represented by the following formula (1): 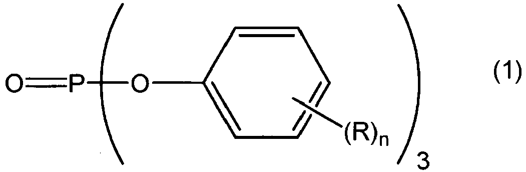 wherein R represents an alkyl group having 1 to 10 carbon atoms, preferably 1 to 4 carbon atoms; n represents an integer of 0 to 5, preferably 0 to 2, more preferably 1. A plurality of R's present may be the same as or different from each other. A plurality of n's present may be the same as or different from each other.

The alkyl group having 1 to 10 carbon atoms represented by R is specifically a methyl group, an ethyl group, a propyl group, an isopropyl group, a butyl group, an isobutyl group, a pentyl group, a hexyl group, a heptyl group, an octyl group, a nonyl group, a decyl group, or the like. The compound represented by the formula (1) may be, for example, triphenyl phosphate (n = 0), tricresyl phosphate (R: methyl group, n = 1), trixylenyl phosphate (R: methyl group, n = 2), cresyldiphenyl phosphate (one aryl group is a cresyl group (R: methyl group, n = 1), two aryl groups are a phenyl group (n = 0)), xylenyldiphenyl phosphate (one aryl group is a xylenyl group (R: methyl group, n = 2), two aryl groups is a phenyl group (n = 0)), isopropylated triphenyl phosphate (R: isopropyl group, n = 0 to 5), or isobutylated triphenyl phosphate (R: butyl group, n = 0 to 5).

The content of the phosphorus-based antiwear agent may be 0.1% by mass or more, 0.5% by mass or more, or 1% by mass or more, and may be 5% by mass or less, 4% by mass or less, or 3% by mass or less, based on the total amount of the refrigerating machine oil.

The kinematic viscosity at 40°C of the refrigerating machine oil is preferably 3 mm²/s or more, more preferably 4 mm²/s or more, still more preferably 5 mm²/s or more. The kinematic viscosity at 40°C of the refrigerating machine oil is preferably 500 mm²/s or less, more preferably 400 mm²/s or less, still more preferably 300 mm²/s or less.

The kinematic viscosity at 100°C of the refrigerating machine oil is preferably 1 mm²/s or more, more preferably 2 mm²/s or more. The kinematic viscosity at 100°C of the refrigerating machine oil is preferably 100 mm²/s or less, more preferably 50 mm²/s or less.

The pour point of the refrigerating machine oil is preferably -10°C or less, more preferably -20°C or less.

The volume resistivity of the refrigerating machine oil is preferably 1.0 × 10⁹ Ω·m or more, more preferably 1.0 × 10¹⁰ Ω·m or more, still more preferably 1.0 × 10¹¹ Ω·m or more. The volume resistivity in the present invention means the volume resistivity at 25°C measured according to JIS C2101:1999.

The moisture content of the refrigerating machine oil is preferably 200 ppm or less, more preferably 100 ppm or less, still more preferably 50 ppm or less based on the total amount of the refrigerating machine oil.

The acid value of the refrigerating machine oil is preferably 1.0 mgKOH/g or less, more preferably 0.1 mgKOH/g or less. The acid value in the present invention means the acid value measured according to JIS K2501:2003.

The ash content of the refrigerating machine oil is preferably 100 ppm or less, more preferably 50 ppm or less. The ash content in the present invention means the ash content measured according to JIS K2272: 1998.

The refrigerating machine oil according to the present embodiment is used with a hydrocarbon refrigerant. The working fluid composition for a refrigerating machine according to the present embodiment comprises the refrigerating machine oil and a hydrocarbon refrigerant. The content of the refrigerating machine oil in the working fluid composition for a refrigerating machine is preferably 1 to 500 parts by mass, more preferably 2 to 400 parts by mass based on 100 parts by mass of the refrigerant.

The hydrocarbon refrigerant is a hydrocarbon having 2 to 4 carbon atoms. Examples of the hydrocarbon specifically include ethylene, ethane, propylene, propane (R290), cyclopropane, normal butane, isobutane, cyclobutane, methyl cyclopropane, or mixtures of two or more thereof. Among these, the hydrocarbon refrigerant is preferably a gaseous hydrocarbon refrigerant at 25°C and 1 atmospheric pressure, more preferably, propane, normal butane, isobutane, or a mixture thereof.

The refrigerant used with the refrigerating machine oil, and the refrigerant contained in the working fluid composition for a refrigerating machine are not particularly limited as long as the hydrocarbon refrigerant is contained; for example, only a hydrocarbon refrigerant may be contained or further another refrigerant may be contained in addition to a hydrocarbon refrigerant. Examples of the another refrigerant include saturated hydrofluorocarbon refrigerants, unsaturated hydrofluorocarbon refrigerants, fluorine-containing ether-based refrigerants such as perfluoroethers, bis(trifluoromethyl)sulfide refrigerants, trifluoroiodomethane refrigerants, and natural refrigerants such as ammonia and carbon dioxide. If the refrigerant further contains another refrigerant, the proportion of the hydrocarbon refrigerant in the total amount of the refrigerant is 50% by mass or more, preferably 70% by mass or more, particularly preferably 90% by mass or more.

The refrigerating machine oil and the working fluid composition for a refrigerating machine according to the present embodiment are suitably used in air conditioners, refrigerators, open or sealed air conditioners for cars, dehumidifiers, boilers, freezers, freezing and refrigerating storehouses, vending machines, showcases having reciprocal or rotary sealed compressors, or as refrigerating machines for chemical plants and refrigerating machines having a centrifugal compressor, or the like.

Hereinafter, the present invention will be more specifically described based on Examples.

In Examples and Comparative Examples, the base oils and the additives shown below were used to prepare refrigerating machine oils having compositions (% by mass based on the total amount of the refrigerating machine oil) according to Tables 1 to 5.

### (Base oil)

A1: copolymer of ethylene and α-olefin (product name: Lucant HC-40, made by Mitsui Chemicals, Inc., kinematic viscosity at 40°C: 380 mm²/s, kinematic viscosity at 100°C: 40 mm²/s, viscosity index: 155, pour point: -40.0°C, flash point: 250°C)
A2: linear alkylbenzene (made by JX Energy K.K., kinematic viscosity at 40°C: 19.4 mm²/s, pour point: <-50.0°C, flash point: 200°C, density: 0.873 g/cm³)

### (Additives)

b1: tricresyl phosphate
b2: compound represented by the following formula (2) (n = 0 to 2, iPr: isopropyl group)

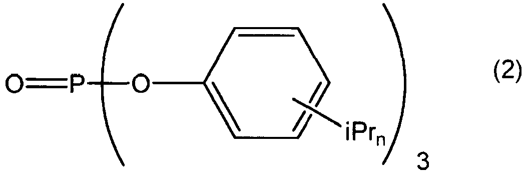

The low temperature deposition properties of the refrigerating machine oils in Examples and Comparative Examples were evaluated according to the procedure shown below. The results are shown in Tables 1 to 5.

### (Low temperature deposition properties)

A refrigerating machine oil and the following refrigerant were sealed in a 10 mL pressure-resistant glass tube such that the ratio (mass ratio) of refrigerating machine oil/refrigerant was 90/10; after stirring, the mixture was left to stand at -40°C for one hour. Subsequently, the presence/absence of the deposit (suspension and separation) was observed. Evaluation was performed where the case where there was no deposit was "A", and the case where there was a deposit was "B".

### Refrigerant: R290 (propane)

R410A (mixed refrigerant of difluoromethane (R32) and pentafluoroethane (R125), R32/R125 = 50/50 (mass ratio))

**[Table 1]**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Composition of base oil | A1 | 100 | 90 | 50 | 10 | 100 | 90 | 50 | 10 |
| | A2 | - | 10 | 50 | 90 | - | 10 | 50 | 90 |
| Composition of refrigerating machine oil | Base oil | 100 | 100 | 100 | 100 | 100 | 100 | 100 | 100 |
| Type of refrigerant | | R290 | R290 | R290 | R290 | R410A | R410A | R410A | R410A |
| Low temperature deposition properties | | A | A | A | A | B | B | B | B |

**[Table 2]**

| | | Example 5 | Example 6 | Example 7 | Example 8 | Comparative Example 5 | Comparative Example 6 | Comparative Example 7 | Comparative Example 8 |
|---|---|---|---|---|---|---|---|---|---|
| Composition of base oil | A1 | 100 | 90 | 50 | 10 | 100 | 90 | 50 | 10 |
| | A2 | - | 10 | 50 | 90 | - | 10 | 50 | 90 |
| Composition of refrigerating machine oil | Base oil | Residue | Residue | Residue | Residue | Residue | Residue | Residue | Residue |
| | b1 | 1 | 1 | 1 | 1 | 1 | 1 | 1 | 1 |
| Type of refrigerant | | R290 | R290 | R290 | R290 | R410A | R410A | R410A | R410A |
| Low temperature deposition properties | | A | A | A | A | B | B | B | B |

**[Table 3]**

| | | Example 9 | Example 10 | Example 11 | Example 12 | Comparative Example 9 | Comparative Example 10 | Comparative Example 11 | Comparative Example 12 |
|---|---|---|---|---|---|---|---|---|---|
| Composition of base oil | A1 | 100 | 90 | 50 | 10 | 100 | 90 | 50 | 10 |
| | A2 | - | 10 | 50 | 90 | - | 10 | 50 | 90 |
| Composition of refrigerating machine oil | Base oil | Residue | Residue | Residue | Residue | Residue | Residue | Residue | Residue |
| | b1 | 3 | 3 | 3 | 3 | 3 | 3 | 3 | 3 |
| Type of refrigerant | | R290 | R290 | R290 | R290 | R410A | R410A | R410A | R410A |
| Low temperature deposition properties | | A | A | A | A | B | B | B | B |

**[Table 4]**

| | | Example 13 | Example 14 | Example 15 | Example 16 | Comparative Example 13 | Comparative Example 14 | Comparative Example 15 | Comparative Example 16 |
|---|---|---|---|---|---|---|---|---|---|
| Composition of base oil | A1 | 100 | 90 | 50 | 10 | 100 | 90 | 50 | 10 |
| | A2 | - | 10 | 50 | 90 | - | 10 | 50 | 90 |
| Composition of refrigerating machine oil | Base oil | Residue | Residue | Residue | Residue | Residue | Residue | Residue | Residue |
| | b1 | 1 | 1 | 1 | 1 | 1 | 1 | 1 | 1 |
| Type of refrigerant | | R290 | R290 | R290 | R290 | R410A | R410A | R410A | R410A |
| Low temperature deposition properties | | A | A | A | A | B | B | B | B |

**[Table 5]**

| | | Example 17 | Example 18 | Example 19 | Example 20 | Comparative Example 17 | Comparative Example 18 | Comparative Example 19 | Comparative Example 20 |
|---|---|---|---|---|---|---|---|---|---|
| Composition of base oil | A1 | 100 | 90 | 50 | 10 | 100 | 90 | 50 | 10 |
| | A2 | - | 10 | 50 | 90 | - | 10 | 50 | 90 |
| Composition of refrigerating machine oil | Base oil | Residue | Residue | Residue | Residue | Residue | Residue | Residue | Residue |
| | b1 | 3 | 3 | 3 | 3 | 3 | 3 | 3 | 3 |
| Type of refrigerant | | R290 | R290 | R290 | R290 | R410A | R410A | R410A | R410A |
| Low temperature deposition properties | | A | A | A | A | B | B | B | B |

The low temperature fluidity of the refrigerating machine oils in Examples and Comparative Examples was evaluated according to the procedure shown below. The results are shown in Tables 6 to 11.

### (Low temperature fluidity)

FIG. 1 is a schematic view for illustrating a method for evaluating low temperature fluidity. As illustrated in FIG. 1(a), a refrigerating machine oil and a refrigerant were sealed in a 10 mL pressure-resistant glass tube 1 such that the ratio (mass ratio) of refrigerating machine oil/refrigerant was 90/10; after stirring, the mixture was left to stand at - 40°C for one hour. The distance between the bottom surface 1a of the glass tube 1 and the solution surface 2a of the working fluid composition 2 comprising the refrigerating machine oil and the refrigerant at this time was defined as H. Subsequently, as illustrated in FIG. 1(b), when the glass tube 1 was inverted, the solution surface 2a of the working fluid composition 2 gradually rose. The time T from the time when the glass tube 1 was inverted to the time when the distance h between the bottom surface 1a of the glass tube 1 and the solution surface 2a of the working fluid composition 2 reached 20% of the height H (h/H = 0.2) was measured. Evaluation was performed where the case where T was 30 seconds or less was "A", the case where T was more than 30 seconds and 45 seconds or less was "B", and the case where T was more than 45 seconds or the refrigerating machine oil and the refrigerant were separated from each other was "C".

**[Table 6]**

| | Example 1 | Example 2 | Example 3 | Example 4 | Example 5 | Example 6 | Example 7 | Example 8 |
|---|---|---|---|---|---|---|---|---|
| Mass ratio of A1 to A2 (A1/A2) | 100/0 | 90/10 | 50/50 | 10/90 | 100/0 | 90/10 | 50/50 | 10/90 |
| Type of refrigerant | R290 | R290 | R290 | R290 | R290 | R290 | R290 | R290 |
| Low temperature fluidity | C | B | A | A | C | B | A | A |

**[Table 7]**

| | Example 9 | Example 10 | Example 11 | Example 12 | Example 13 | Example 14 | Example 15 | Example 16 |
|---|---|---|---|---|---|---|---|---|
| Mass ratio of A1 to A2 (A1/A2) | 100/0 | 90/10 | 50/50 | 10/90 | 100/0 | 90/10 | 50/50 | 10/90 |
| Type of refrigerant | R290 | R290 | R290 | R290 | R290 | R290 | R290 | R290 |
| Low temperature fluidity | C | B | A | A | C | B | A | A |

**[Table 8]**

| | Example 17 | Example 18 | Example 19 | Example 20 |
|---|---|---|---|---|
| Mass ratio of A1 to A2 (A1/A2) | 100/0 | 90/10 | 50/50 | 10/90 |
| Type of refrigerant | R290 | R290 | R290 | R290 |
| Low temperature fluidity | C | B | A | A |

**[Table 9]**

| | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|
| Mass ratio of A1 to A2 (A1/A2) | 100/0 | 90/10 | 50/50 | 10/90 | 100/0 | 90/10 | 50/50 | 10/90 |
| Type of refrigerant | R410A | R410A | R410A | R410A | R410A | R410A | R410A | R410A |
| Low temperature fluidity | C | C | C | C | C | C | C | C |

**[Table 10]**

| | Comp. Example 9 | Comp. Example 10 | Comp. Example 11 | Comp. Example 12 | Comp. Example 13 | Comp. Example 14 | Comp. Example 15 | Comp. Example 16 |
|---|---|---|---|---|---|---|---|---|
| Mass ratio of A1 to A2 (A1/A2) | 100/0 | 90/10 | 50/50 | 10/90 | 100/0 | 90/10 | 50/50 | 10/90 |
| Type of refrigerant | R410A | R410A | R410A | R410A | R410A | R410A | R410A | R410A |
| Low temperature fluidity | C | C | C | C | C | C | C | C |

**[Table 11]**

| | Comp. Example 17 | Comp. Example 18 | Comp. Example 19 | Comp. Example 20 |
|---|---|---|---|---|
| Mass ratio of A1 to A2 (A1/A2) | 100/0 | 90/10 | 50/50 | 10/90 |
| Type of refrigerant | R410A | R410A | R410A | R410A |
| Low temperature fluidity | C | C | C | C |

### Reference Signs List

1 ... glass tube, 1a ... bottom surface, 2 ... working fluid composition, 2a ... solution surface.

## Claims

1. A working fluid composition for a refrigerating machine, comprising:
a refrigerating machine oil comprising a copolymer of ethylene and an α-olefin as a base oil; and
a hydrocarbon refrigerant, wherein the hydrocarbon refrigerant is a hydrocarbon having 2 to 4 carbon atoms, and the proportion of the hydrocarbon refrigerant in the total amount of the refrigerant is 50% by mass or more.

2. The working fluid composition for a refrigerating machine according to claim 1, further comprising an alkylbenzene as the base oil.

3. The working fluid composition for a refrigerating machine according to claim 2, wherein a mass ratio of a content of the copolymer to a content of the alkylbenzene is 10/90 to 90/10.

4. The working fluid composition for a refrigerating machine according to claim 2 or 3, wherein a mass ratio of a content of the copolymer to a content of the alkylbenzene is 10/90 to 50/50.

5. Use of a composition comprising a copolymer of ethylene and an α-olefin as a base oil together with a hydrocarbon refrigerant, wherein the proportion of the hydrocarbon refrigerant in the total amount of the refrigerant is 50% by mass or more, as a refrigerating machine oil.

6. The use according to claim 5, wherein the composition further comprises an alkylbenzene as a base oil.

7. The use according to claim 6, wherein a mass ratio of a content of the copolymer to a content of the alkylbenzene is 10/90 to 90/10.

8. The use according to claim 6 or 7, wherein a mass ratio of a content of the copolymer to a content of the alkylbenzene is 10/90 to 50/50.

## Patentansprüche

1. Arbeitsmediumzusammensetzung für eine Kältemaschine, umfassend:
ein Kältemaschinenöl, umfassend ein Copolymer aus Ethylen und einem α-Olefin als Basisöl, und
ein Kohlenwasserstoff-Kühlmittel, wobei es sich bei dem Kohlenwasserstoff-Kühlmittel um einen Kohlenwasserstoff mit 2 bis 4 Kohlenstoffatomen handelt und der Anteil des Kohlenwasserstoff-Kühlmittels in der Gesamtmenge des Kühlmittels 50 Massen-% oder mehr beträgt.

2. Arbeitsmediumzusammensetzung für eine Kältemaschine gemäß Anspruch 1, ferner umfassend ein Alkylbenzol als das Basisöl.

3. Arbeitsmediumzusammensetzung für eine Kältemaschine gemäß Anspruch 2, wobei ein Massenverhältnis eines Gehalts am Copolymer zu einem Gehalt am Alkylbenzol 10/90 bis 90/10 beträgt.

4. Arbeitsmediumzusammensetzung für eine Kältemaschine gemäß Anspruch 2 oder 3, wobei ein Massenverhältnis eines Gehalts am Copolymer zu einem Gehalt am Alkylbenzol 10/90 bis 50/50 beträgt.

5. Verwendung einer Zusammensetzung, umfassend ein Copolymer aus Ethylen und einem α-Olefin als Basisöl zusammen mit einem Kohlenwasserstoff-Kühlmittel, wobei der Anteil des Kohlenwasserstoff-Kühlmittels in der Gesamtmenge des Kühlmittels 50 Massen-% oder mehr beträgt, als Kältemaschinenöl.

6. Verwendung gemäß Anspruch 5, wobei die Zusammensetzung ferner ein Alkylbenzol als Basisöl umfasst.

7. Verwendung gemäß Anspruch 6, wobei ein Massenverhältnis eines Gehalts am Copolymer zu einem Gehalt am Alkylbenzol 10/90 bis 90/10 beträgt.

8. Verwendung gemäß Anspruch 6 oder 7, wobei ein Massenverhältnis eines Gehalts am Copolymer zu einem Gehalt am Alkylbenzol 10/90 bis 50/50 beträgt.

## Revendications

1. Composition de fluide de travail pour machine frigorifique, comprenant :
une huile pour machine frigorifique comprenant un copolymère d'éthylène et d'une α-oléfine en tant qu'huile de base ; et
un frigorigène hydrocarbure, le frigorigène hydrocarbure étant un hydrocarbure ayant de 2 à 4 atomes de carbone, et la proportion du frigorigène hydrocarbure dans la quantité totale du frigorigène étant de 50 % en masse ou plus.

2. Composition de fluide de travail pour machine frigorifique selon la revendication 1, comprenant en outre un alkylbenzène en tant qu'huile de base.

3. Composition de fluide de travail pour machine frigorifique selon la revendication 2, dans laquelle un rapport massique d'une teneur du copolymère à une teneur de l'alkylbenzène va de 10/90 à 90/10.

4. Composition de fluide de travail pour machine frigorifique selon la revendication 2 ou 3, dans laquelle un rapport massique d'une teneur du copolymère à une teneur de l'alkylbenzène va de 10/90 à 50/50.

5. Utilisation d'une composition comprenant un copolymère d'éthylène et d'une α-oléfine en tant qu'huile de base avec un frigorigène hydrocarbure, la proportion du frigorigène hydrocarbure dans la quantité totale du frigorigène étant de 50 % en masse ou plus, en tant qu'huile pour machine réfrigérante.

6. Utilisation selon la revendication 5, la composition comprenant en outre un alkylbenzène en tant qu'huile de base.

7. Utilisation selon la revendication 6, un rapport massique d'une teneur du copolymère à une teneur de l'alkylbenzène allant de 10/90 à 90/10.

8. Utilisation selon la revendication 6 ou 7, un rapport massique d'une teneur du copolymère à une teneur de l'alkylbenzène allant de 10/90 à 50/50.
